# EUROPÄISCHE PATENTANMELDUNG

(11) **EP 1 136 871 A2**
(43) Veröffentlichungstag der Anmeldung: **26.09.2001**
(21) Anmeldenummer: 01200825.6
(22) Anmeldetag: 06.03.2001
(51) Int. Cl.: G02F 1/1335, C09K 11/06

(54) **Flüssigkristall-Farbbildschirm**

(30) Priorität: 14.03.2000 DE 10012326
(71) Anmelder: Philips Corporate Intellectual Property GmbH, 52064 Aachen (DE); Koninklijke Philips Electronics N.V., 5621 BA Eindhoven (NL)
(72) Erfinder: Nikol, Hans, Dr., Habsburgerallee 11, 52064 Aachen (DE); Jüstel, Thomas, Dr., Habsburgerallee 11, 52064 Aachen (DE); Van Asselt, Rob, Habsburgerallee 11, 52064 Aachen (DE); Broer, Dick, Habsburgerallee 11, 52064 Aachen (DE)
(74) Vertreter: Gössmann, Klemens

(57) **Zusammenfassung**

Die Erfindung beschreibt einen Flüssigkristall-Farbbildschirm mit verbesserter Lichteffizienz und verbessertem Blickwinkel. Der Flüssigkristall-Farbbildschirm weist eine photolumineszente Schicht (7) auf, welche einen dichroistisch absorbierenden Farbstoff und einen isotrop emittierenden Farbstoff aufweist.

## Beschreibung

Die Erfindung betrifft einen Flüssigkristall-Farbbildschirm ausgestattet mit einer Lichtquelle, einem Polarisator, einer Flüssigkristallzelle, welche zwei transparente Platten zwischen denen ein Flüssigkristallmaterial angeordnet ist, wobei die Platten jeweils eine Matrix aus Elektroden tragen, aufweist, einer Frontplatte und einer photolumineszenten Schicht.

Flüssigkristallbildschirme beruhen auf dem Prinzip, dass Licht einer externen Lichtquelle die Schicht aus Flüssigkristallen passiert oder auch nicht. Durch die erhaltenen hellen und dunklen Punkte wird ein Bild erzeugt. Durch Einsatz von Farbfiltern ist es auch möglich Flüssigkristall-Farbbildschirme herzustellen. Die Verwendung von Farbfiltern ist nicht sehr effizient, da ein großer Teil des einfallenden Lichtes durch diese Farbfilter absorbiert wird. Auch die Kombination einer Polarisator-Analysator-Einheit mit Farbfiltern ist ungünstig, da ein großer Teil des einfallenden Lichtes in thermische Energie überführt wird. Diese Effekte resultieren in einer Verminderung der Helligkeit und der Energieeffizienz des Flüssigkristall-Farbbildschirms.

Ein weiteres Problem ist der eingeschränkte Blickwinkel von Flüssigkristallbildschirmen, der sich aufgrund des Wirkungsprinzips und des Aufbaus eines Flüssigkristallbildschirms ergibt.

Aus EP 0 889 350 A1 ist ein Flüssigkristall-Farbbildschirm bekannt, bei dem eine photolumineszente Schicht, welche eine isotrope Absorption und eine polarisierte, chromatische Emission aufweist, anstelle eines konventionellen Polarisators verwendet wird. In derselben Schrift ist auch ein Flüssigkristall-Farbbildschirm beschrieben, bei dem eine photolumineszente Schicht zwischen Flüssigkristallzelle und Betrachter aufgebracht ist. Besonders vorteilhaft ist bei dieser Anordnung auch, dass die Emission des farbigen Lichtes unabhängig von blickwinkeleinschränkenden Effekten der Flüssigkristallschicht ist. Die photolumineszente Schicht enthält beispielsweise einen Polyolefin-Film, welcher mit einem dichroistischen Fluorophor, vorzugsweise Poly(phenylenethynylen)-Derivaten, dotiert ist.

Die in der Patentanmeldung beschriebenen Fluorophore weisen jedoch meist nur eine sehr niedrige Emissionsquantenausbeute, ein niedriges dichroistisches Verhältnis von paralleler Absorption zu senkrechter Absorption oder eine kurze Lebensdauer auf.

Der Erfindung liegt die Aufgabe zugrunde, einen verbesserten Flüssigkristall-Farbbildschirm mit verbessertem Blickwinkel und verbesserter Lichteffizienz bereitzustellen.

Die Aufgabe wird gelöst durch Flüssigkristall-Farbbildschirm ausgestattet mit einer Lichtquelle, einem Polarisator, einer Flüssigkristallzelle, welche zwei transparente Platten zwischen denen ein Flüssigkristallmaterial angeordnet ist, wobei die Platten jeweils eine Matrix aus Elektroden tragen, aufweist, einer Frontplatte und einer photolumineszenten Schicht, die einen dichroistisch absorbierenden Farbstoff und einen isotrop emittierenden Farbstoff enthält.

Durch Anordnung der funktionellen Elemente in unterschiedlichen Farbstoffmolekülen können für die jeweilige Funktion optimale Materialien synthetisiert und verwendet werden. Eine photolumineszente Schicht, die eine große Absorption und eine hohe Emissionsquantenausbeute zeigt, erhöht die Effizienz des gesamten Flüssigkristall-Farbbildschirms.

Es kann vorteilhaft sein, dass der dichroistisch absorbierende Farbstoff und der isotrop emittierende Farbstoff miteinander verknüpft sind.

Ein intramolekularer Energietransfer von einer Moleküleinheit zu einer anderen kann effektiver sein als ein intermolekularer Energietransfer zwischen zwei Molekülen.

In dieser Ausführungsform ist es bevorzugt, dass der dichroistisch absorbierende Farbstoff und der isotrop emittierende Farbstoff durch eine oder mehrere Verbindungen ausgewählt aus der Gruppe der Phenylen-Einheiten, Methylen-Einheiten, Difluormethylen-Einheiten, Peptid-Einheiten, Norbornyl-Einheiten, Spiroverbindungen, Pyrazin-Einheiten, Cyclohexyl-Einheiten, Cyclopentyl-Einheiten oder Cyclobutyl-Einheiten miteinander verknüpft sind.

Diese Einheiten stören nicht die elektronische Struktur des dichroistisch absorbierenden Farbstoffes sowie des isotrop emittierenden Farbstoffes, noch weisen sie elektronische Wechselwirkungen mit ihnen auf.

Es ist besonders bevorzugt, dass der dichroistisch absorbierende Farbstoff einen hohen Extinktionskoeffizienten bei der von der Lichtquelle emittierten Wellenlänge besitzt.

Es ist außerdem bevorzugt, dass der isotrop emittierende Farbstoff einen kleinen Extinktionskoeffizienten bei der vom dichroistisch absorbierenden Farbstoff absorbierten Wellenlänge besitzt.

Unter diesen Bedingungen wird effektiv und ausschließlich der dichroistisch absorbierende Farbstoff angeregt.

Weiterhin ist es vorteilhaft, dass der isotrop emittierende Farbstoff einen hohen Extinktionskoeffizienten bei der vom dichroistisch absorbierenden Farbstoff emittierten Wellenlänge besitzt

Unter diesen Bedingungen ist ein effektiver Energietransfer zwischen dichroistisch absorbierendem Farbstoff und dem isotrop emittierenden Farbstoff gewährleistet.

Es ist außerdem bevorzugt, dass der isotrop emittierende Farbstoff ein Perylen-Derivat, einen Laserfarbstoff-Derivat oder ein Stilben-Derivat enthält.

Das ππ^{*}-Energieniveau dieser Moleküle wird durch einen Energietransfer vom Absorber auf den Emitter bevölkert. Das ππ^{*}-Energieniveau liegt einige Nanometer bathochrom verschoben zur dichroistischen Absorption des Absorbers. Die Emission des farbigen Lichtes erfolgt dann bei Wellenlängen von 400 nm und größer. Durch Variation des isotrop emittierenden Farbstoffes können alle Farben erreicht werden.

Es ist weiterhin vorteilhaft, dass der dichroistisch absorbierende Farbstoff und der isotrop emittierende Farbstoff in ein Flüssigkristallmedium oder in einem langgestreckten Polymer eingebettet oder epitaktisch auf einem anisotropen Substrat aufgewachsen sind.

Die Farbstoffmoleküle der photolumineszenten Schicht werden auf einem Träger in einer Vorzugsrichtung derart angeordnet, dass sich ihre Längsachsen in dieselbe Richtung orientieren. Prinzipiell gilt, dass die photolumineszente Schicht und die Flüssigkristallzelle möglichst nah beieinander angeordnet sein sollten, um Parallaxen zu verhindern.

Es ist weiterhin bevorzugt, dass die photolumineszente Schicht mehrere, parallele Streifen, einen pixelförmigen Aufbau oder einen zonenartigen Aufbau aufweist.

Die Streifen enthalten abwechselnd eine photolumineszente Schicht mit dichroistisch absorbierendem Farbstoff und einen in einer der drei Grundfarben isotrop emittierenden Farbstoff. In Kombination mit den gitterförmigen Elektroden wird so ein pixelförmiger Aufbau erhalten.

In einer bevorzugten Ausführung weist der Flüssigkristall-Farbbildschirm einen Farbfilter zwischen Frontplatte und photolumineszenter Schicht auf.

Einige isotrop emittierende Farbstoffe, wie zum Beispiel Perylen-Derivate, können durch einfallendes Umgebungslicht angeregt werden. Durch diese Anregung kann der Kontrast des Flüssigkristall-Farbbildschirms herabgesetzt werden. Die Verwendung eines Farbfilters kann dies verhindern.

In einer ganz besonders bevorzugten Ausführung weist die Frontplatte einen UV-Spiegel auf.

Dieser UV-Spiegel reflektiert nicht absorbiertes UV-Licht zurück ins optische System. Dadurch wird einerseits der Betrachter vor diesem UV-Licht geschützt und andererseits wird die Lichteffizienz des Flüssigkristallfarbbildschirms durch dieses "Recycling" erhöht.

Im folgenden soll die Erfindung anhand von zwei Figuren und zwei Ausführungsbeispielen erläutert werden.

Dabei zeigt
- Fig. 1: den schematischen Aufbau eines Flüssigkristall-Farbbildschirms und
- Fig. 2: den streifenförmigen Aufbau von Elektroden, Flüssigkristallmaterial und photolumineszenter Schicht.

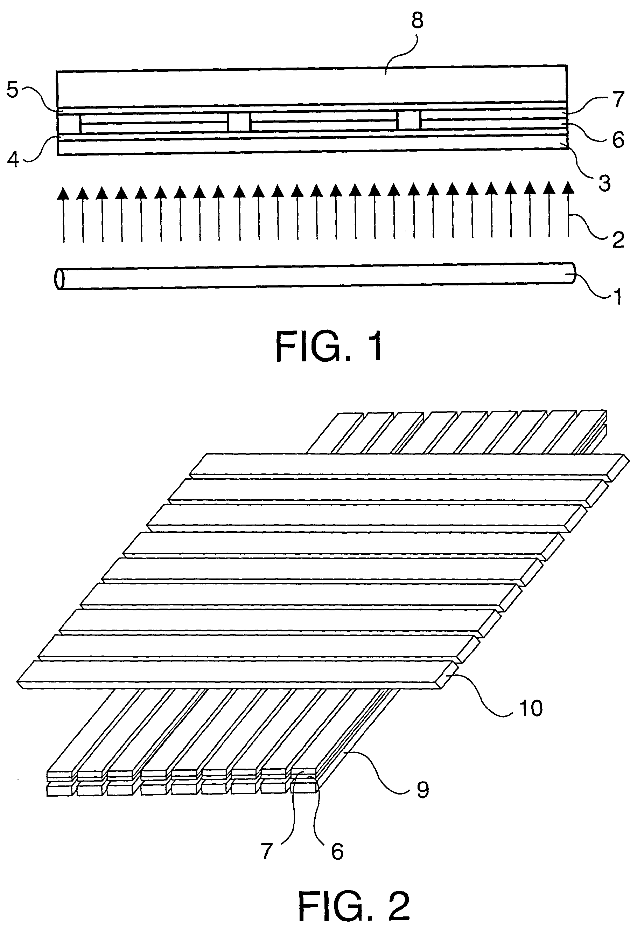

Gemäß Fig. 1 weist ein Flüssigkristall-Farbbildschirm eine Lichtquelle 1 auf, welche UV-Licht 2 emittiert. Das emittierte UV-Licht 2 gelangt zu einem Polarisator 3 und von dort zu einer Flüssigkristallzelle, welche zwei transparente Platten 4 und 5 aufweist, die jeweils eine Matrix aus Elektroden 9, 10 tragen. Die Platten 4 und 5, welche beispielsweise aus Glas oder aus einem Kunstharzmaterial wie Polyester, Polycarbonat, Polyethersulfon oder Polyolefin, insbesondere Polynorbornen oder Polypropylen, sind, können auch eine Orientierungsschicht aus beispielsweise Polyimid oder SiO₂ aufweisen. Zwischen den Platten 4, 5 ist ein Flüssigkristallmaterial 6 angeordnet. Außerdem befindet möglichst nah an dem Flüssigkristallmaterial 6 eine photolumineszente Schicht 7. Das Flüssigkristallmaterial 6 und die photolumineszente Schicht 7 können beispielsweise einen streifenförmigen, einen pixelförmigen oder einen zonenartigen Aufbau besitzen. Das Flüssigkristallmaterial 6 enthält vorzugsweise TN(twisted nematic)-Flüssigkristalle, da diese Flüssigkristalle und somit der TN-Effekt einen höheren Kontrast bewirken und eine Unabhängigkeit von der Wellenlänge des UV-Lichtes 2 zeigen. Es können beispielsweise Flüssigkristallmaterialien aus *p*-Alkylbenzyliden-*p*'-cyanoanilin, *p*-Alkoxybenzyliden-*p*'-cyanoanilin, Cyanobiphenylen, Phenylcyclohexanen, Biphenylcyclohexanen oder Gemische aus diesen Flüssigkristallmaterialien verwendet werden. Das Flüssigkristallmaterial 6 kann auch STN(super twisted nematic)-Flüssigkristalle, VAN(vertically alligned)-Flüssigkristalle oder OCB(optically compensated bend)-Flüssigkristalle enthalten. Die photolumineszente Schicht 7 enthält einen dichroistisch absorbierenden Farbstoff und einen isotrop emittierenden Farbstoff. Die beiden Farbstoffmoleküle können auch miteinander verknüpft werden. Als verknüpfende Verbindungen können dabei beispielsweise ein oder mehrere Phenylen-Einheiten, Methylen-Einheiten, Difluormethylen-Einheiten, Peptid-Einheiten, Norbornyl-Einheiten, Spiroverbindungen, Pyrazin-Einheiten, Cyclohexyl-Einheiten, Cyclopentyl-Einheiten oder Cyclobutyl-Einheiten fungieren. Der dichroistisch absorbierende Farbstoff kann beispielsweise eine *p*-Octiphenyl-Verbindung sein. Diese *p*-Octiphenyl-Verbindung kann mit einer oder mehreren verzweigten oder unverzweigten Alkylketten substituiert sein. Die Alkylketten, welche beispielsweise Butylgruppen sind, können zusätzlich miteinander verknüpft sein. Der isotrop emittierende Farbstoff kann beispielsweise ein Perylen-Derivat wie 16,17-Dimethoxydinaphtho[1,2,3-cd;3',2', 1 '-lm]perylen-5,10-dion, Dinaphtho[1,2,3-cd:3',2',1'-lm]perylen-5,10-dion, Dinaphtho[1,2,3-cd:1',2',3'-lm]perylen-9,18-dion oder ein Diimid, welches sich von der 3,4,9,10-Perylentetracarbonsäure ableitet, enthalten. Der isotrop emittierende Farbstoff kann auch einen Laserfarbstoff wie zum Beispiel 2,5-Bis(4-biphenylyl)oxazol (BBO), 2-(Biphenyl-4-yl)-6-phenylbenzoxazol (PBBO), *p*-Terphenyl, ein Cumarin-Derivat, einen Phenoxazin-Farbstoff oder eine 3,6-Bis(alkylamino)-9-phenylxanthylium-Verbindung (Rhodamin) enthalten. Weiterhin kann der isotrop emittierende Farbstoff ein Stilben-Derivat wie beispielsweise *4-N,N*-Diphenylaminostilben, 1,4-Bis(4-*N*,*N*-Diphenylaminophenyl)butadien, 1,4-Bis(4-*N*,*N*-Diphenylaminostyryl)benzol, 1,3-Bis(4-*N*,*N*-Diphenylaminostyryl)benzol, 1,4-Bis(4-*N*,*N*-Diphenylaminostyryl)-3,5-dimethoxybenzol, 1,4-Bis(4-*N*,*N*-Diphenylamino-2'-phenyl-styryl)benzol enthalten. Der dichroistisch absorbierende Farbstoff und der isotrop emittierende Farbstoff sind beispielsweise in einem Flüssigkristallmedium oder in einem langgestreckten Polymer eingebettet. Sie können aber auch epitaktisch auf einem anisotropischen Substrat aufgewachsen werden.

Es ist auch möglich, dass die photolumineszente Schicht 7 einen Schichtaufbau aus unterer und oberer Schicht aufweist. Die untere Schicht, welche näher zur Lichtquelle ist als die obere Schicht, enthält nur den dichroistisch absorbierende Farbstoff, welcher in einer Vorzugsrichtung in einem Flüssigkristallmedium oder in einem langgestreckten Polymer eingebettet oder epitaktisch auf einem anisotropen Substrat aufgewachsen ist. Die obere Schicht enthält den isotrop emittierenden Farbstoff, der nicht orientiert aufgebracht werden muss.

Sind der dichroistisch absorbierende Farbstoff und der isotrop emittierende Farbstoff in ein Flüssigkristallmedium eingebettet, kann es von Vorteil sein, dass zwischen Flüssigkristallmaterial 6 und photolumineszenter Schicht 7 eine Schutzschicht oder Passivierungsschicht ist. Diese Schutzschicht oder Passivierungsschicht verhindert eine Ausrichtung des Flüssigkristallmediums bei Anlegen eines elektrischen Feldes an die Elektroden 9, 10 bzw. bei dessen Abschaltung. Eine andere Möglichkeit um dies zu verhindern ist, die Moleküle des Flüssigkristallmediums, nach Einbettung des dichroistisch absorbierenden Farbstoffes und des isotrop emittierenden Farbstoffes, untereinander zu vernetzen.

Alternativ kann sich die photolumineszente Schicht 7 auch außerhalb der Flüssigkristallzelle zwischen der transparenten Platte 5 und der Frontplatte 8 befinden.

Prinzipiell kann ein derartiger Flüssigkristall-Farbbildschirm auch eine aktive Matrix-Adressierung aufweisen. In diesem Fall weist eine der beiden transparenten Platten 4, 5 als Elektrode ein Array aus aktiven Schaltelementen wie zum Beispiel Metall-Isolator-Metall-Elementen (MIM) oder einen Dünnschichttransistoren (TFT) auf und auf der anderen Platte befindet sich eine Elektrode aus ITO.

In Fig. 2 ist der streifenförmige Aufbau des Flüssigkristallmaterials 6 und der photolumineszenten Schicht 7 gezeigt. Außerdem befinden sich ober- und unterhalb dieser beiden Schichten mehrere, parallele streifenförmige Elektroden 9 und 10. Die Elektroden 9 und 10 sind beispielsweise aus ITO.

Das Funktionsprinzip eines Flüssigkristall-Farbbildschirms ist wie folgt: Ein von der Lichtquelle 1 emittierter UV-Lichtstrahl 2 gelangt zu einem Polarisator 3, der nur Licht einer bestimmten Schwingungsrichtung durchlässt. Die Schwingungsebene des auf einen Flüssigkristall des Flüssigkristallmaterials 6 auffallenden polarisierten Lichtstrahls wird beim Durchgang durch die Zelle den Molekül-Langsachsen folgend gedreht. Wird eine Spannung an die Elektroden 9 und 10 angelegt, richten sich die Flüssigkristalle parallel zum elektrischen Feld aus. Die Schwingungsebene des polarisierten Lichts wird nun nicht mehr gedreht. Anschließend gelangt das UV-Licht zum dichroistisch absorbierenden Farbstoff, welcher je nach Polarisationsrichtung des UV-Lichtes dieses absorbiert oder nicht. Nach erfolgter Absorption wird die aufgenommene Energie auf den isotrop emittierenden Farbstoff übertragen. Je nachdem ob die beiden Farbstoffe miteinander verknüpft sind oder nicht, erfolgt der Energietransfer intra- oder intermolekular. Der isotrop emittierende Farbstoff emittiert Licht mit einer sichtbaren Wellenlänge, welches durch die Frontplatte 8 zum Betrachter gelangt.

Im folgenden werden Ausführungsformen der Erfindung erläutert, die beispielhafte Realisierungsmöglichkeiten darstellen.

### Ausführungsbeispiel 1

Ein Flüssigkristall-Farbbildschirm wies als Lichtquelle 1 eine UV-Lampe auf, welche UV-Licht 2 mit einer Wellenlänge von 366 nm emittierte. Desweiteren wies der Flüssigkristall-Farbbildschirm einen Polarisator 3 auf. Die Flüssigkristallzelle des Flüssigkristall-Farbbildschirms wies eine untere transparente Platte 4 und eine obere transparente Platte 5 auf, welche beide Glas enthielten. Auf den transparenten Platten 4 und 5 waren jeweils mehrere, parallele streifenförmige Elektroden 9 und 10 aus ITO aufgebracht. Die Elektroden 9 waren um 90° gedreht zu den Elektroden 10 angeordnet. Eine streifenförmige, photolumineszente Schicht 7 ist zwischen Flüssigkristallzelle und oberer transparenter Platte 5 angeordnet. Jeder Streifen der photolumineszenten Schicht 7 enthielt ein *p*-Octiphenyl-Derivat als dichroistisch absorbierenden Farbstoff. Außerdem befand sich in jedem Streifen ein Farbstoff, welcher in einer der Grundfarben isotrop emittierte. Als blau emittierender Farbstoff wurde 4-*N*,*N*-Diphenylaminostilben, als rot emittierender Farbstoff Sulforhodamin B und als grün emittierender Farbstoff wurde 16,17-Dimethoxydinaphtho[1,2,3-cd;3',2',1'-lm]perylen-5,10-dion verwendet. Die beiden Farbstoffe waren in ein Flüssigkristallmedium aus Cyanobiphenylen eingebettet. Außerdem enthielt der Flüssigkristall-Farbbildschirm eine Frontplatte 8 aus Glas.

Der gesamte Flüssigkristall-Farbbildschirm wies einen verbesserten Blickwinkel und verbesserte Lichteffizienz auf.

### Ausführungsbeispiel 2

Ein Flüssigkristall-Farbbildschirm wies als Lichtquelle 1 eine UV-Lampe auf, welche UV-Licht 2 mit einer Wellenlänge von 366 nm emittierte. Desweiteren wies der Flüssigkristall-Farbbildschirm einen Polarisator 3 auf. Die Flüssigkristallzelle des Flüssigkristall-Farbbildschirms wies eine untere transparente Platte 4 und eine obere transparente Platte 5 auf, welche beide Glas enthielten. Auf den transparenten Platten 4 und 5 waren jeweils mehrere parallele, streifenförmige Elektroden 9 und 10 aus ITO aufgebracht. Die Elektroden 9 waren um 90° gedreht zu den Elektroden 10 angeordnet. Eine streifenförmige, photolumineszente Schicht 2 ist zwischen Flüssigkristallzelle und oberer transparenter Platte 5 angeordnet. Jeder Streifen der photolumineszenten Schicht 7 enthielt neben Cyanobiphenylen als Flüssigkristallmedium ein *p*-Octiphenyl-Derivat als dichroistisch absorbierenden Farbstoff. Über eine Methylen-Gruppe in 2-Position des ersten Phenylringes des *p*-Octiphenyl-Derivats war der dichroistisch absorbierende Farbstoff mit einem isotrop emittierenden Farbstoff verbunden. Als blau emittierender Farbstoff wurde Dinaphtho[1,2,3-cd:3',2',1'-lm]perylen-5,10-dion, als rot emittierender Farbstoff Sulforhodamin B und als grün emittierender Farbstoff wurde 16,1 7-Dimethoxydinaphtho[1,2,3-cd;3',2',1'-lm]perylen-5,10-dion verwendet. Außerdem enthielt der Flüssigkristall-Farbbildschirm eine Frontplatte 8 aus Glas.

Der gesamte Flüssigkristall-Farbbildschirm wies einen verbesserten Blickwinkel und verbesserte Lichteffizienz auf.

## Patentansprüche

1. Flüssigkristall-Farbbildschirm ausgestattet mit einer Lichtquelle (1), einem Polarisator (3), einer Flüssigkristallzelle, welche zwei transparente Platten (4, 5) zwischen denen ein Flüssigkristallmaterial (6) angeordnet ist, wobei die Platten (4, 5) jeweils eine Matrix aus Elektroden (9, 10) tragen, aufweist, einer Frontplatte (8) und einer photolumineszenten Schicht (7), die einen dichroistisch absorbierenden Farbstoff und einen isotrop emittierenden Farbstoff enthält.

2. Flüssigkristall-Farbbildschirm nach Anspruch 1,
**dadurch gekennzeichnet**,
dass der dichroistisch absorbierende Farbstoff und der isotrop emittierende Farbstoff miteinander verknüpft sind.

3. Flüssigkristall-Farbbildschirm nach Anspruch 2,
**dadurch gekennzeichnet**,
dass der dichroistisch absorbierende Farbstoff und der isotrop emittierende Farbstoff durch eine oder mehrere Verbindungen ausgewählt aus der Gruppe der Phenylen-Einheiten, Methylen-Einheiten, Difluormethylen-Einheiten, Peptid-Einheiten, Norbornyl-Einheiten, Spiroverbindungen, Pyrazin-Einheiten, Cyclohexyl-Einheiten, Cyclopentyl-Einheiten oder Cyclobutyl-Einheiten miteinander verknüpft sind.

4. Flüssigkristall-Farbbildschirm nach Anspruch 1,
**dadurch gekennzeichnet**,
dass der dichroistisch absorbierende Farbstoff einen hohen Extinktionskoeffizienten bei der von der Lichtquelle (1) emittierten Wellenlänge besitzt.

5. Flüssigkristall-Farbbildschirm nach Anspruch 1,
**dadurch gekennzeichnet**,
dass der isotrop emittierende Farbstoff einen kleinen Extinktionskoeffizienten bei der vom dichroistisch absorbierenden Farbstoff absorbierten Wellenlänge besitzt.

6. Flüssigkristall-Farbbildschirm nach Anspruch 1,
**dadurch gekennzeichnet**,
dass der isotrop emittierende Farbstoff einen hohen Extinktionskoeffizienten bei der vom dichroistisch absorbierende Farbstoff emittierten Wellenlänge besitzt.

7. Flüssigkristall-Farbbildschirm nach Anspruch 1,
**dadurch gekennzeichnet**,
dass der isotrop emittierende Farbstoff ein Perylen-Derivat, einen Laserfarbstoff-Derivat oder ein Stilben-Derivat enthält.

8. Flüssigkristall-Farbbildschirm nach Anspruch 1,
**dadurch gekennzeichnet**,
dass der dichroistisch absorbierende Farbstoff und der isotrop emittierende Farbstoff in ein Flüssigkristallmedium oder in einem langgestreckten Polymer eingebettet oder epitaktisch auf einem anisotropischen Substrat aufgewachsen sind.

9. Flüssigkristall-Farbbildschirm nach Anspruch 1,
**dadurch gekennzeichnet**,
dass die photolumineszente Schicht (7) mehrere, parallele Streifen, einen pixelförmigen Aufbau oder einen zonenartigen Aufbau aufweist.

10. Flüssigkristall-Farbbildschirm nach Anspruch 1,
**dadurch gekennzeichnet**,
dass der Flüssigkristall-Farbbildschirm einen Farbfilter zwischen Frontplatte (8) und photolumineszenter Schicht (7) aufweist.

11. Flüssigkristall-Farbbildschirm nach Anspruch 1,
**dadurch gekennzeichnet**,
dass die Frontplatte (8) einen UV-Spiegel aufweist.
